# EUROPEAN PATENT APPLICATION

(11) **EP 3 536 469 A2**
(43) Date of publication of application: **11.09.2019**
(21) Application number: 18214824.7
(22) Date of filing: 20.12.2018
(51) Int. Cl.: B28C 5/18, B28C 5/08, B01F 15/00, F16M 11/28

(54) **CONCRETE MIXER STAND**

(30) Priority: 21.12.2017 US 201762608851 P
(71) Applicant: TTI (Macao Commercial Offshore) Limited, Macao (MO)
(72) Inventor: Van Bergen, Jonathan R., Easley, SC South Carolina 29642 (US); Thackery, Clinton C., Clemson, SC South Carolina 29631 (US)
(74) Representative: Stevenson-Hill, Jack Patrick

(57) **Abstract**

A concrete mixer (310) including a mixing tub (314) having an annular side wall (322) and a bottom wall (326), a main frame (346) configured to rotatably support the mixing tub (314), where the main frame (346) includes a telescoping member (338) that is capable of extending between a first length and a second length, and a base frame (354) supporting the main frame (346). The base frame (354) includes a first leg (386) having a first wheel (378) to enable transport of the concrete mixer (310), and a second leg (390) having a foot (394) to prevent the concrete mixer (310) from rolling away.

## Description

### CROSS-REFERENCE TO RELATED APPLICATIONS

The present application claims priority to U.S. Provisional Patent Application No. 62/608,851, filed December 21, 2017.

### TECHNICAL FIELD

The present invention relates to concrete mixers, and in particular concrete mixer stands and carts.

### BACKGROUND

Concrete mixers are used to continuously mix concrete to prevent the concrete from settling and drying or hardening. By keeping the concrete in motion, the concrete will maintain a more fluid form before and during the construction period. This enables a user to pour the concrete and work with it before it settles and solidifies.

### SUMMARY OF THE INVENTION

The concrete mixer disclosed herein includes a mixing tub and a stand (or cart) to help transport the mixing tub and support the mixing tub above a concrete pour location. The stand can also be used to adjust the height or orientation of the mixing tub relative to the pour location. In addition, the stand is equipped with a means for detaching the mixing tub when not in use.

In one embodiment, the invention provides a concrete mixer including a mixing tub having an annular side wall and a bottom wall, a main frame configured to rotatably support the mixing tub, where the main frame includes a telescoping member that is capable of extending between a first length and a second length, and a base frame supporting the main frame. The base frame includes a first leg having a first wheel to enable transport of the concrete mixer, and a second leg having a foot to prevent the concrete mixer from rolling away.

The main frame may further include a handle.

The mixing tub may be coupled to the main frame by a detachable connection for removably coupling the mixing tub to the main frame.

The detachable connection may include a male part and a female part for receiving the male part. The male part may be located on one of the main frame and the bottom wall of the mixing tub and the female part may be located on the other one of the main frame and the bottom wall of the mixing tub.

The detachable connection may further include a locking pin, the locking pin being removably engagable with the male part and the female part.

The first leg may have a triangular shape and include a second wheel.

The first leg and the second leg may each extend outwardly from the main frame in opposing directions.

The foot may be formed by an elongated tubular member.

In another embodiment, the invention provides a concrete mixer including a mixing tub having an annular side wall and a bottom wall, a main frame configured to rotatably support the mixing tub, and a base frame coupled to the main frame, where the base frame is movable relative to the main frame between an open configuration corresponding to a first height of the mixing tub relative to a support surface and a closed configuration corresponding to a second height of the mixing tub relative to a support surface.

The main frame and the base frame may form a C-shape when in the open configuration.

The main frame and the base frame may form a square shape when in the closed configuration.

The main frame may include two L-shaped supports each formed by a first arm and a second arm. The base frame may include two L-shaped supports each formed by a first leg and a second leg.

The first arms and the first legs may be oriented generally parallel to one another when in the open configuration. The first arms and the first legs may be oriented generally perpendicular to one another when in the closed configuration.

The concrete mixer may further comprise a secondary frame rotatably coupling the mixing tub to the main frame.

The secondary frame may include a handle to help rotate the mixing tub relative to the main frame.

The base frame may include a locking member to selectively prevent movement of the base frame relative to the main frame.

The concrete mixer may further include wheels coupled to the main frame to assist in transport of the concrete mixer.

The concrete mixer may further include a bracket coupled to the base frame, the bracket configured to limited rotation of the base frame relative to the main frame.

The bracket may be configured to engage the ground to prevent the concrete mixer from unintentionally rolling when the concrete mixer is in the closed configuration.

In yet another embodiment, the invention provides a concrete mixer including a mixing tub having an annular side wall and a bottom wall, a main frame configured to rotatably support the mixing tub, and a base frame supporting the main frame, where at least one of the main frame and the base frame is adjustable to move the mixing tub from a first height relative to a support surface to a second height relative to a support surface.

Other aspects of the invention will become apparent by consideration of the detailed description and accompanying drawings.

Where appropriate, any of the optional features discussed above in relation to one of the embodiments may equally be applied to any of the other embodiments.

### BRIEF DESCRIPTION OF THE DRAWINGS

FIG. 1 is a perspective view of a concrete mixer according to one embodiment, with the concrete mixer in an open configuration.
FIG. 2 is a side view of the concrete mixer of FIG. 1 in the open configuration.
FIG. 3 is a front view of the concrete mixer of FIG. 1 in the open configuration.
FIG. 4 is a rear view of the concrete mixer of FIG. 1 in the open configuration.
FIG. 5 is a top view of the concrete mixer of FIG. 1 in the open configuration.
FIG. 6 is a bottom view of the concrete mixer of FIG. 1 in the open configuration.
FIG. 7 is a detailed view of a linkage.
FIG. 8 is a perspective view of the concrete mixer of FIG. 1 in a closed configuration.
FIG. 9 is a side view of the concrete mixer of FIG. 1 in the closed configuration.
FIG. 10 is a front view of the concrete mixer of FIG. 1 in the closed configuration.
FIG. 11 is a rear view of the concrete mixer of FIG. 1 in the closed configuration.
FIG. 12 is a top view of the concrete mixer of FIG. 1 in the closed configuration.
FIG. 13 is a bottom view of the concrete mixer of FIG. 1 in the closed configuration.
FIG. 14 is a perspective view of a concrete mixer according to another embodiment.
FIG. 15 is a side view of the concrete mixer of FIG. 14.
FIG. 16 is a front view of the concrete mixer of FIG. 14.
FIG. 17 is a rear view of the concrete mixer of FIG. 14.
FIG. 18 is a detailed view of a detachable connection of FIG. 14.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

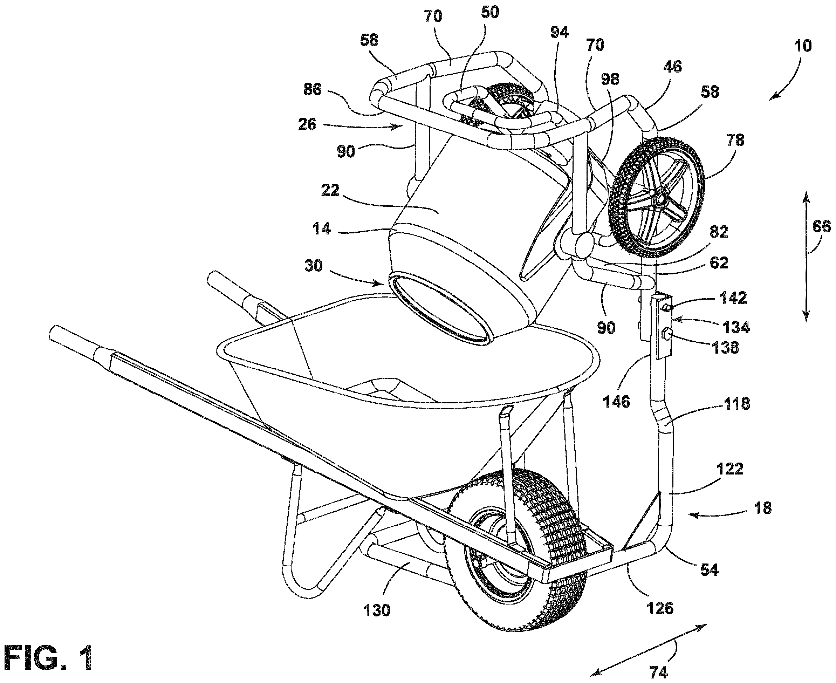

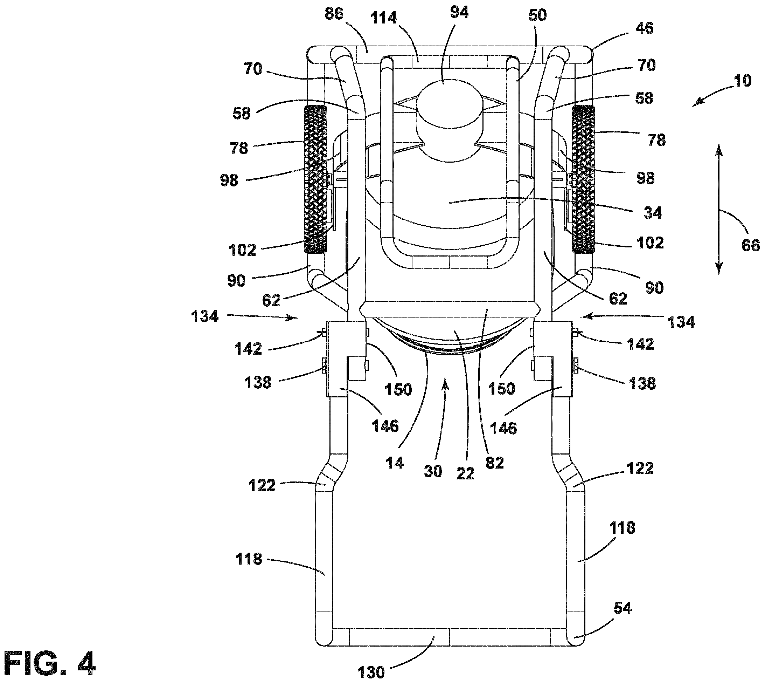

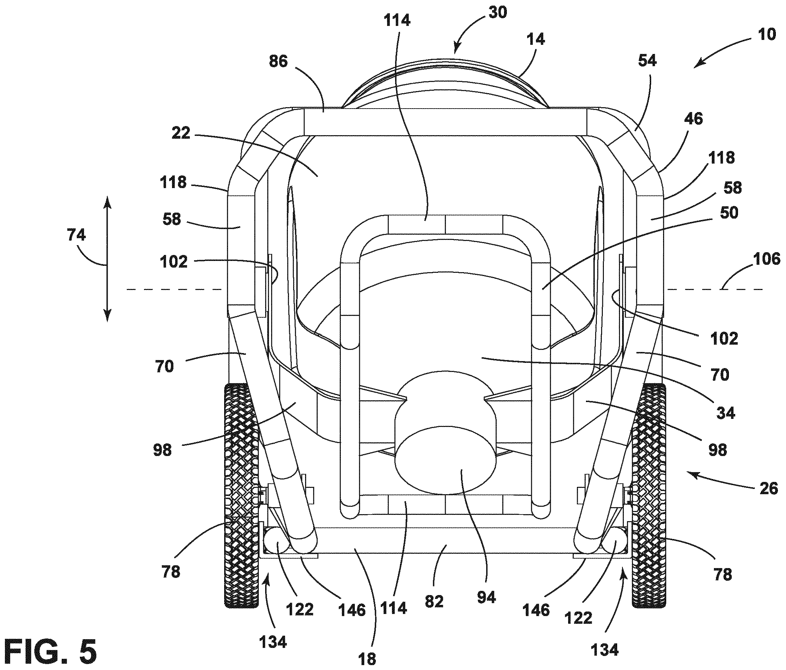

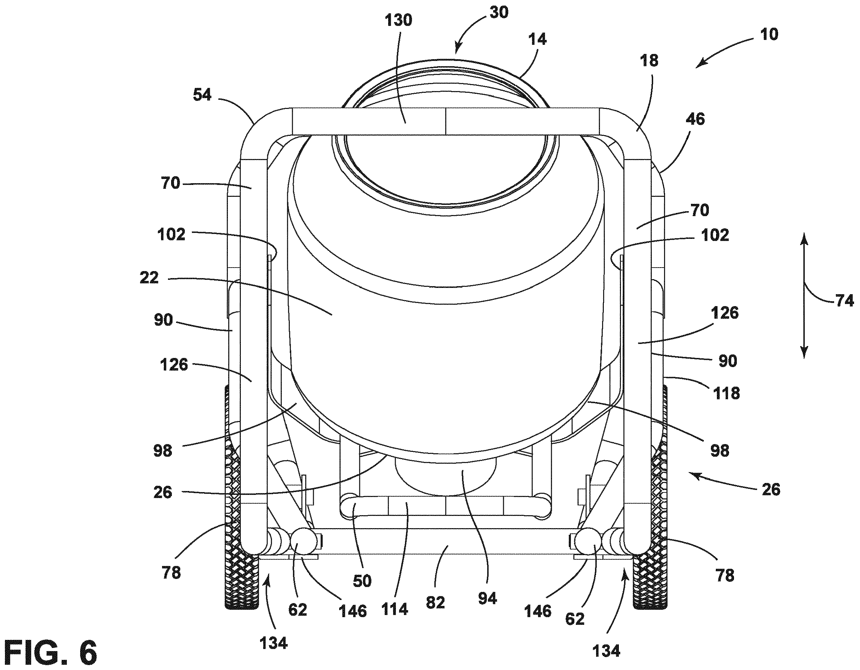

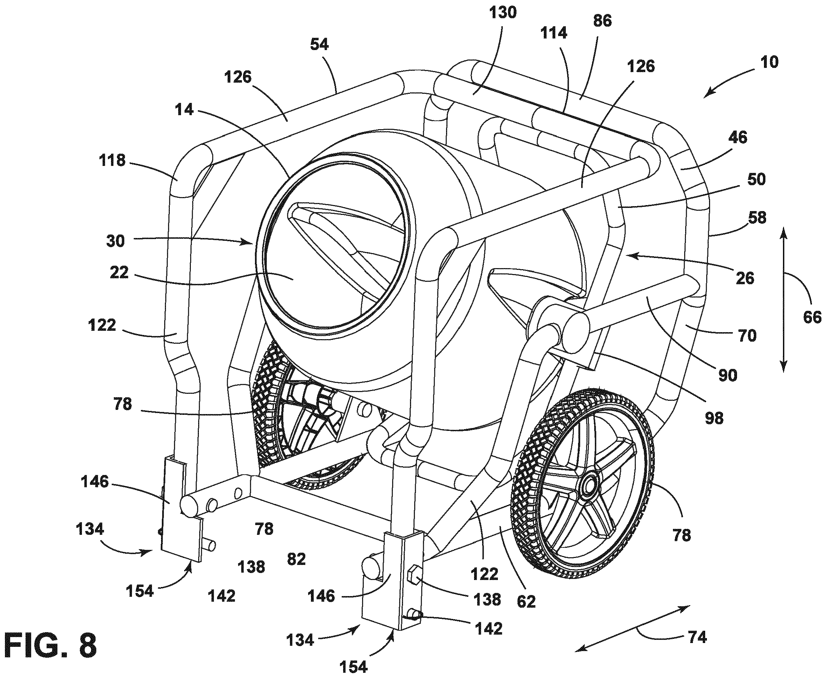

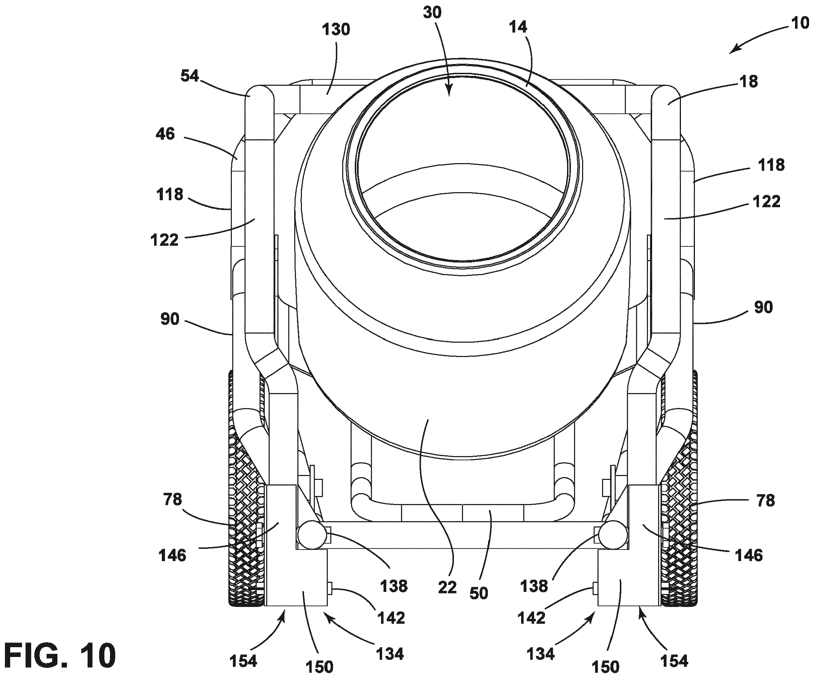

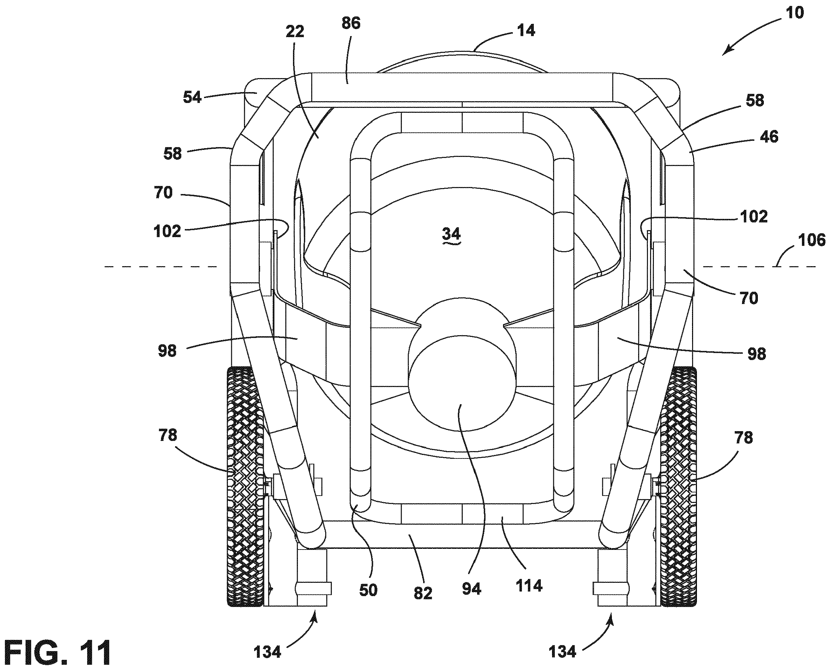

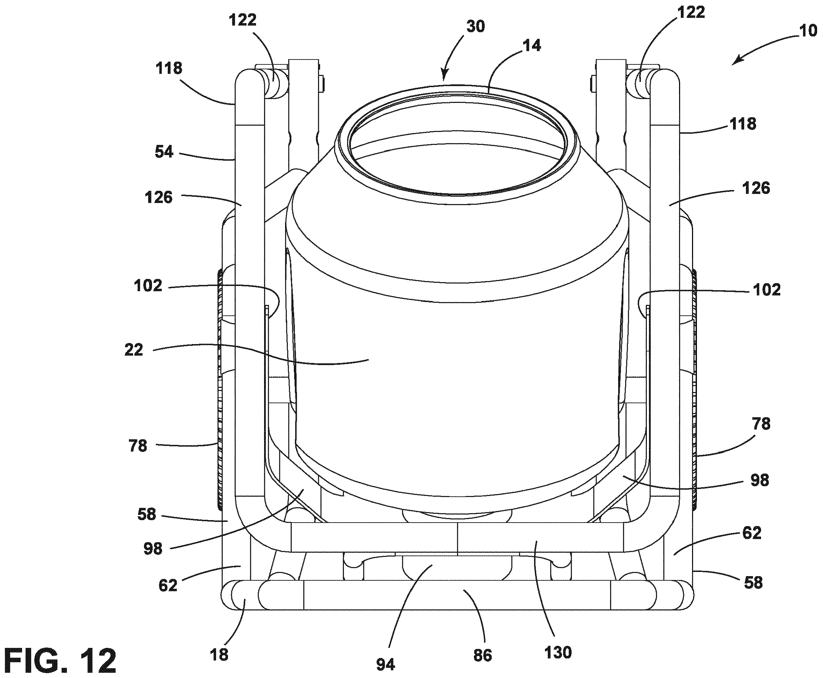

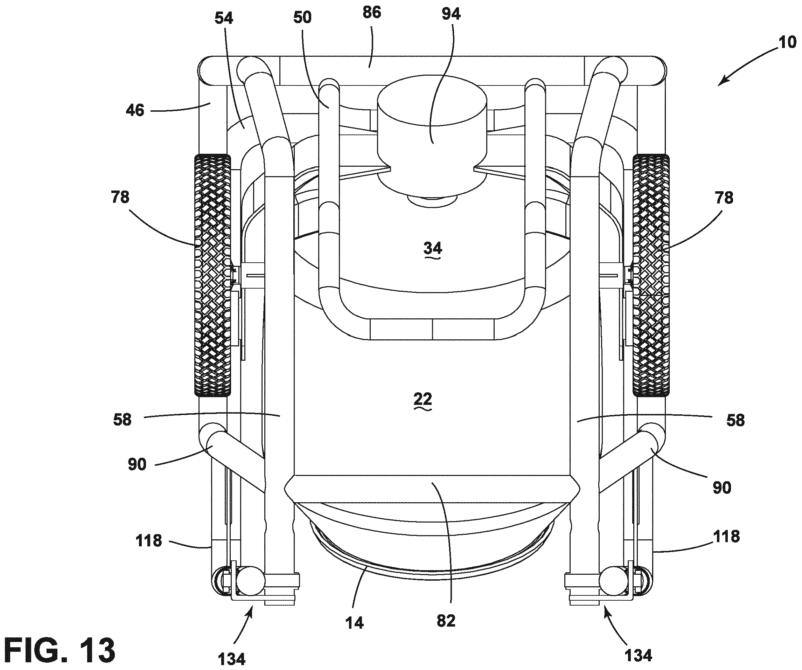

FIGS. 1-13 illustrate one embodiment of a concrete mixer 10. As will be discussed in greater detail below, the concrete mixer 10 is convertible between an open configuration and a closed configuration. FIGS. 1-6 illustrate the concrete mixer 10 in an open configuration and FIGS. 8-13 illustrate the concrete mixer 10 in a closed configuration.

The concrete mixer 10 includes a mixing tub 14 and a stand 18. The mixing tub 14 is generally cylindrical in shape and includes an annular side wall 22 extending between a closed end 26 and an open end 30. The closed end 26 is formed by a bottom wall 34. In other embodiments, the mixing tub 14 can be other shapes and sizes suitable to hold concrete.

The stand 18 includes a main frame 46, a secondary frame 50, and base frame 54. In the illustrated embodiment, the secondary frame 50 and the base frame 54 are movable relative to the main frame 46. In other embodiments, one or both of the secondary frame 50 and the base frame 54 are fixed relative to the main frame 46.

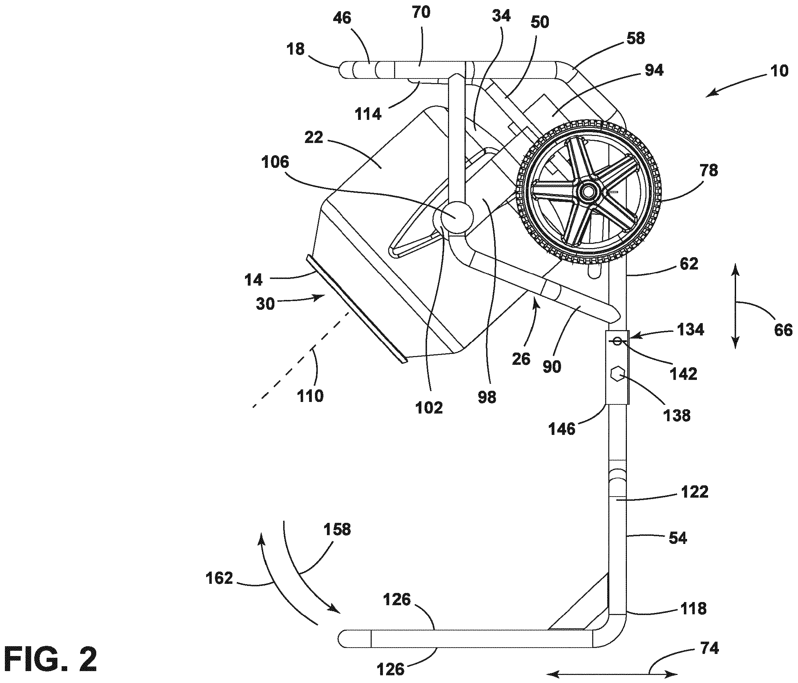

The main frame 46 supports the mixing tub 14. The main frame 46 includes two generally L-shaped supports 58 that are positioned on opposite sides of the mixing tub 14. Each L-shaped support 58 has a first arm 62 extending in a first direction 66 (e.g., a vertical direction as shown in FIG. 2) and a second arm 70 extending in a second direction 74 (e.g., a horizontal direction as shown in FIG. 2). The L-shaped supports 58 are oriented such that the first arms 62 of each L-shaped support 58 are aligned and the second arms 70 of each L-shaped supports 58 are aligned. Additionally, each L-shaped support 58 includes a wheel 78 rotatably coupled to the first arm 62 of the L-shaped support. As will be discussed in greater detail below, the wheels 78 help to transport the concrete mixer 10 when the stand 18 is in the closed configuration.

The L-shaped supports 58 are spaced apart from one another and are connected to one another by first and second cross bars 82, 86, respectively. The first cross bar 82 extends between the first arms 62 of the L-shaped supports 58 and the second cross bar 86 extends between the second arms 70 of the L-shaped supports 58. In addition, a brace 90 extends between the first arm 62 and the second arm 70 of each L-shaped support. The main frame 46 supports the mixing tub 14 via the braces 90. However, in other embodiments, the mixing tub 14 is supported by other parts of the main frame 46.

In the illustrated embodiment, the secondary frame 50 rotatably couples the mixing tub 14 to the main frame 46. Specifically, the secondary frame 50 includes a hub 94 coupled to the mixing tub 14, and a pair of linkages 98 coupled to the main frame 46. The secondary frame 50 has a generally U-shaped body that wraps around the bottom wall 34 of the mixing tub 14 and extends along opposite sides of the mixing tub 14. The hub 94 is coupled to the bottom wall 34 of the mixing tub 14, while the linkages 98 extend from the hub 94, around the bottom of the mixing tub 14, and at least partially along opposite sides of the mixing tub 14.

The linkages 98 are rotatably coupled to the braces 90 on the main frame 46 at a distal end 102 of the linkages 98. This connection allows the mixing tub 14 to pivot relative to the main frame 46 about a first axis 106. For example, the mixing tub 14 can be pivoted downward to pour concrete out of the mixing tub 14. Similarly, the mixing tub 14 can also pivot relative to the main frame 46 in order to maintain an upwards position to prevent concrete from spilling when the stand 18 is converted between the open configuration and the closed configuration. In other embodiments, the linkages 98 can be coupled to other parts of the main frame 46 or may be fixedly coupled to the main frame 46 such that the mixing tub 14 cannot rotate.

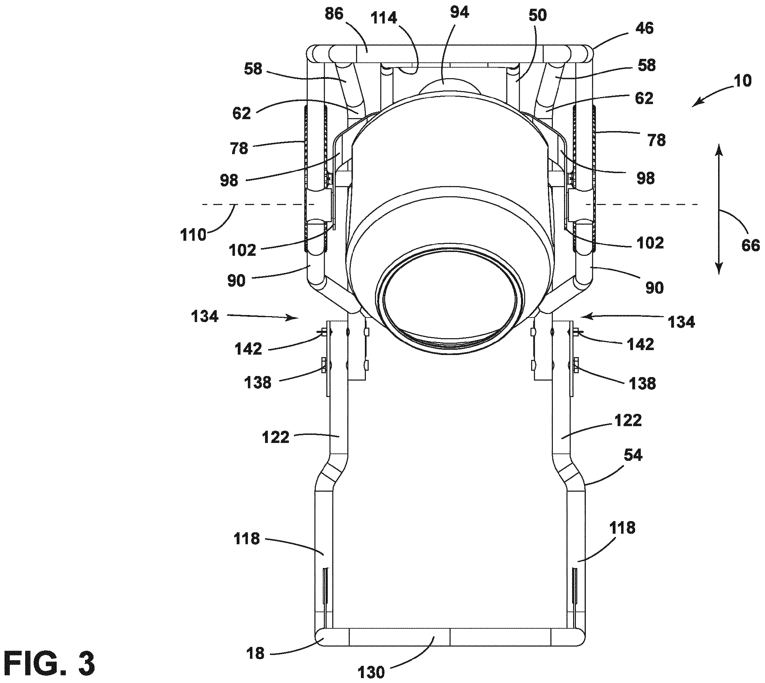

In some embodiments, the mixing tub 14 is also rotatably coupled to the hub 94 such that the mixing tub 14 is capable of spinning about a second axis 110 (FIG. 3). In the illustrated embodiment, the secondary frame 50 also includes handles 114 extending outwardly from the hub 94. The handles 114 enable a user to pivot the mixing tub 14 about the first axis 106 to pour the concrete.

The base frame 54 is rotatably coupled to the main frame 46 via the first arms 62 of the L-shaped supports 58. The base frame 54 also includes two generally L-shaped supports 118 that are positioned on opposite sides of the mixing tub 14. Each L-shaped support 118 has a first leg 122 extending in the first direction 66 (e.g., a vertical direction as shown in FIG. 2) and a second leg 126 extending in the second direction 74 (e.g., a horizontal direction as shown in FIG. 2). The L-shaped supports 58 are oriented such that the first legs 122 of each L-shaped support 118 are aligned and the second legs 126 of each L-shaped support 118 are aligned. The L-shaped supports 118 of the base frame 54 are spaced apart from one another and are connected to one another by a third cross bar 130. The third cross bar 130 extends between the second legs 126 of the L-shaped supports 118. Each L-shaped support 118 of the base frame 54 corresponds to an L-shaped support 58 of the main frame 46.

The base frame 54 is connected to the main frame 46 by hinges 134 that rotatably couple L-shaped supports 118 of the base frame 54 to corresponding L-shaped supports 58 of the main frame 46. Each hinge 134 connects the first arm 62 to the first leg 122 of corresponding L-shaped supports 58, 118. Each hinge 134 includes a pivot member 138, a locking member 142, and a bracket 146. In the illustrated embodiment, the pivot member 138 is a shaft extending through the first arm 62 and the first leg 122 of each pair of corresponding L-shaped supports 58, 118. The pivot member 138 allows the first leg 122 to pivot relative to the first arm 62, which therefore, enables the entire base frame 54 to pivot relative to the main frame 46.

In the illustrated embodiment, the locking member 142 is a locking pin that extends through the first arm 62 and the first leg 122 of each pair of corresponding L-shaped supports 58, 118. The locking member 142 can be selectively removed from the stand 18. When the locking member 142 is inserted through the first arm 62 and the first leg 122, the base frame 54 and the main frame 46 are rotatably fixed. When the locking member 142 is removed from the first arm 62 and first leg 122, the base frame 54 and the main frame 46 are rotatable relative to one another.

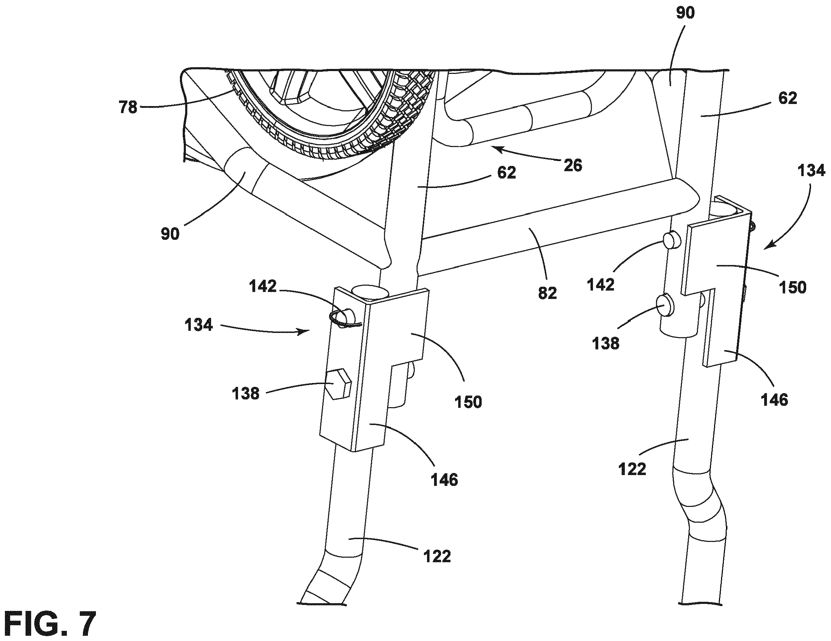

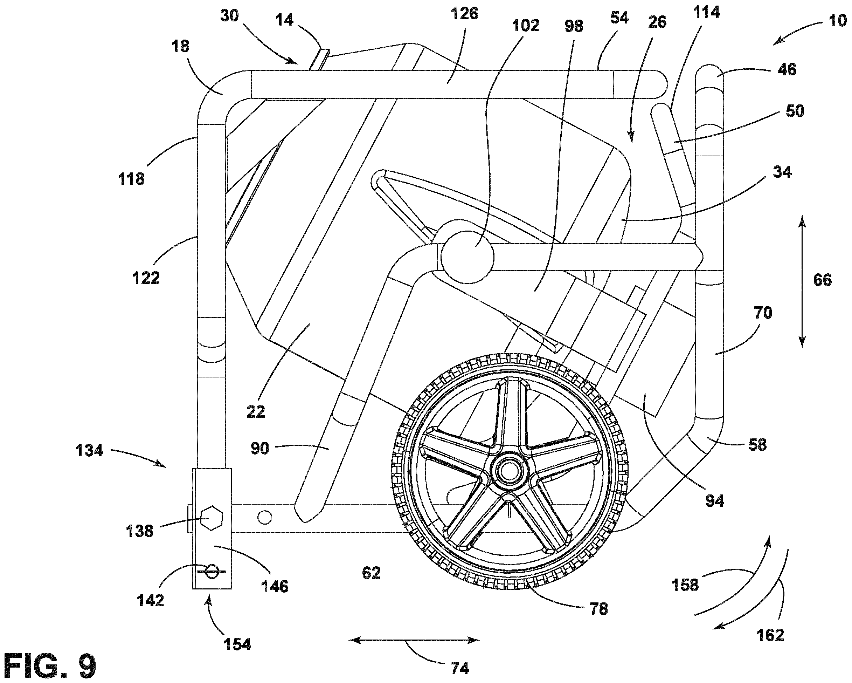

In the illustrated embodiment, the bracket 146 functions as a rotation limiter 150 when the stand 18 is in the open configuration and functions as a support foot 154 when the stand 18 is in the closed configuration. As shown in FIG. 7, the bracket 146 is capable of limiting the degree of rotation of the base frame 54 relative to the main frame 46. The bracket 146 is coupled to and rotates with the first leg 122. The bracket 146 includes a rotation limiter 150 that extends across both the first arm 62 and the first leg 122 in order to stop rotation of the first leg 122 relative to the first arm 62. Additionally, as shown in FIG. 9, the bracket 146 functions as a foot 154 to support the concrete mixer 10. Specifically, the brackets 146 and the wheels 78 engage a ground surface to support the concrete mixer 10 when in the closed configuration.

The concrete mixer 10 can convert between an open configuration and a closed configuration by rotating the base frame 54 relative to the main frame 46. When in the open configuration (FIGS. 1-6), the base frame 54 is rotated in first rotational direction 158 relative to the main frame 46 (e.g., counterclockwise in FIGS. 2 and 9). When in the open configuration the main frame 46 and the base frame 54 form a C-shape when viewed from the side, as shown in FIG. 2. In this configuration, the corresponding first arms 62 and the first legs 122 are oriented parallel to one another. The second legs 126 and the third cross bar 130 engage a ground surface to support the main frame 46 above the ground. The second arms 70 support the mixing tub 14 above a pouring location, such as the ground or a wheel barrow, as shown in FIG. 1. In other words, the first arms 62 and first legs 122 extend in the first direction 66, while the second arms 70 and second legs 126 extend in the second direction 74. The open configuration is often used during operation in order to pour the concrete.

When in the closed configuration (FIGS. 8-13), the base frame 54 is rotated in a second rotational direction 162 (e.g., clockwise in FIGS. 2 and 9). When in the closed configuration, the main frame 46 and the base frame 54 form a square shape. In this configuration, the first arms 62 and first legs 122 are oriented perpendicular to one another. The second arms 70 and the first legs 122 extend in the second direction 66, while the first arms 62 and the second legs 126 extend in the first direction 74. The first arms 62 are positioned generally parallel to the ground surface in order to enable the wheels 78 to engage the ground surface. In addition, the brackets 146 engage the ground and function as support feet, which cooperate with the wheels 78 to support the concrete mixer 10.

When the brackets 146 engage the ground surface, the brackets 146 prevent the concrete mixer 10 from unintentionally rolling away. To transport the concrete mixer 10, the stand 18 can be pivoted such that the brackets 146 disengage the ground and the concrete mixer 10 is supported by only the wheels 78. The wheels 78 can then be used to help transport the concrete mixer 10. The second cross bar 86 can be grasped by a user to help tip the concrete mixer 10 onto the wheels 78. The closed configuration is often used to transport the concrete mixer 10. However, the closed configuration can also be used during operation to pour the concrete. When in the closed configuration, the mixing tub 14 is supported at a lower height above the ground surface (i.e., relative to a support surface) than when in the open configuration. Accordingly, the open configuration and closed configuration can also be used to support the mixing tub 14 at different heights above the ground surface.

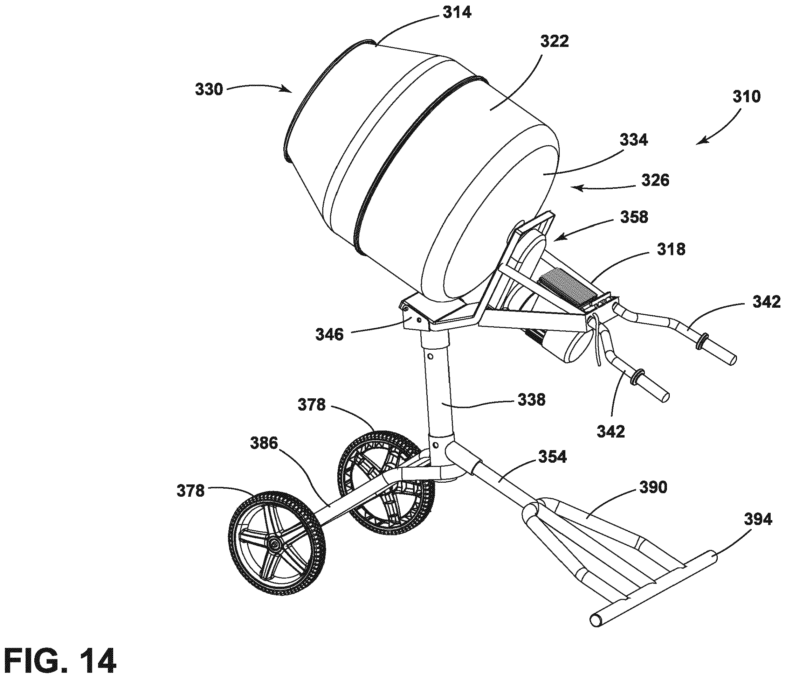

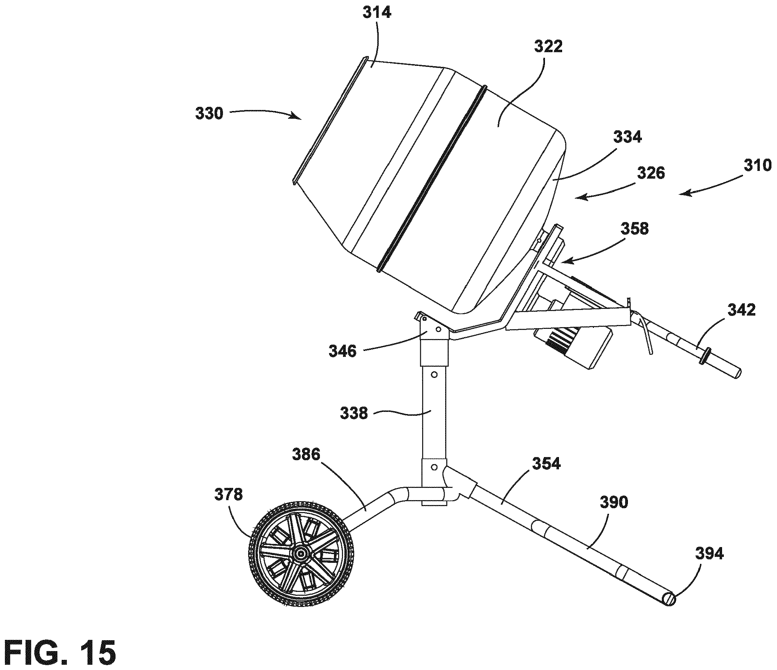

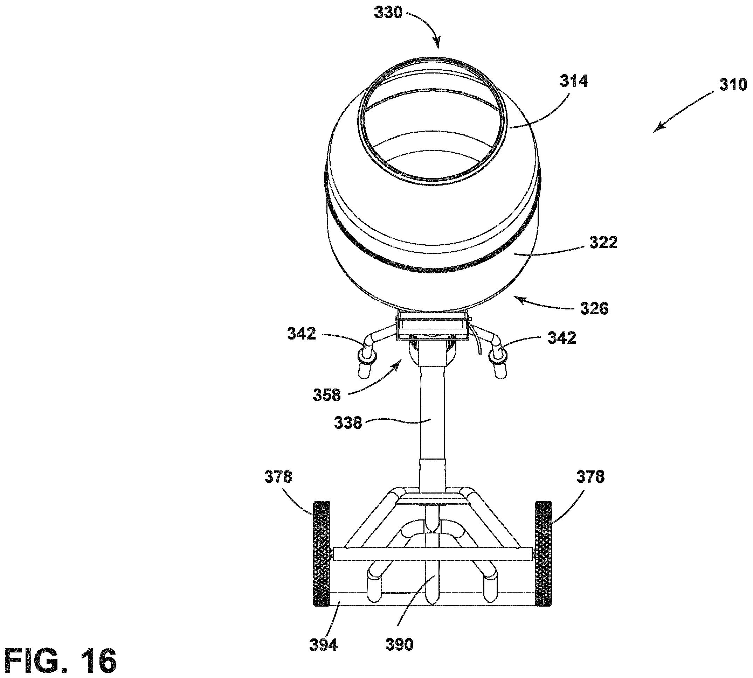

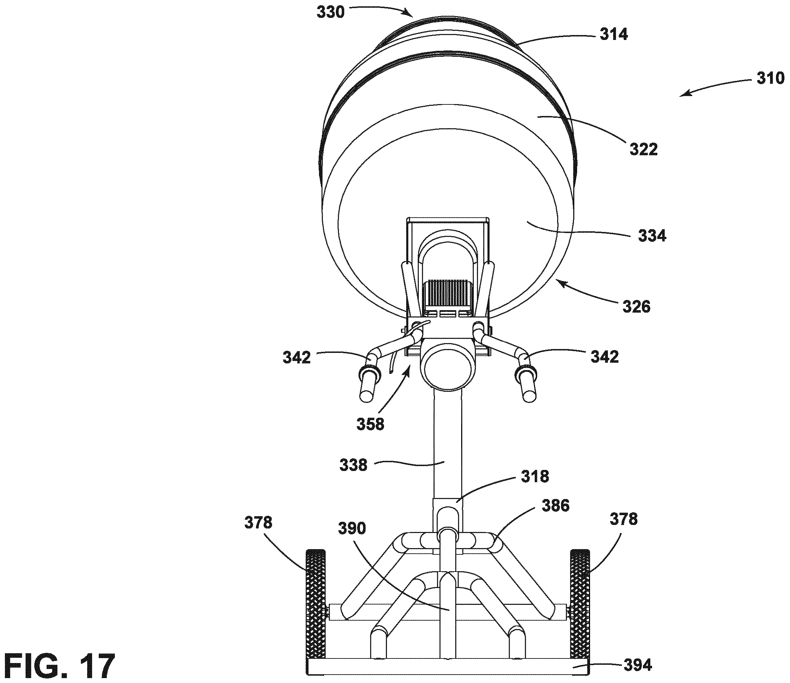

FIGS. 14-18 illustrate another embodiment of a concrete mixer 310. The concrete mixer 310 includes a mixing tub 314 and a stand 318. The mixing tub 314 is generally cylindrical in shape and includes an annular side wall 322 extending between a closed end 326 and an open end 330. The closed end 326 is formed by a bottom wall 334. In other embodiments, the mixing tub 314 can be other shapes and sizes suitable to hold concrete.

The stand 318 includes a main frame 346 and a base frame 354. The main frame 346 includes a column 338 that supports the mixing tub 314 at different heights relative to the ground surface (i.e., relative to a support surface). In some embodiments, the column 338 is a telescoping column 338 that is capable of extending between at least a first length and a second length. The main frame 346 also includes a pair of handles 342 extending outwardly from the column 338 to allow a user to maneuver and control the concrete mixer 310.

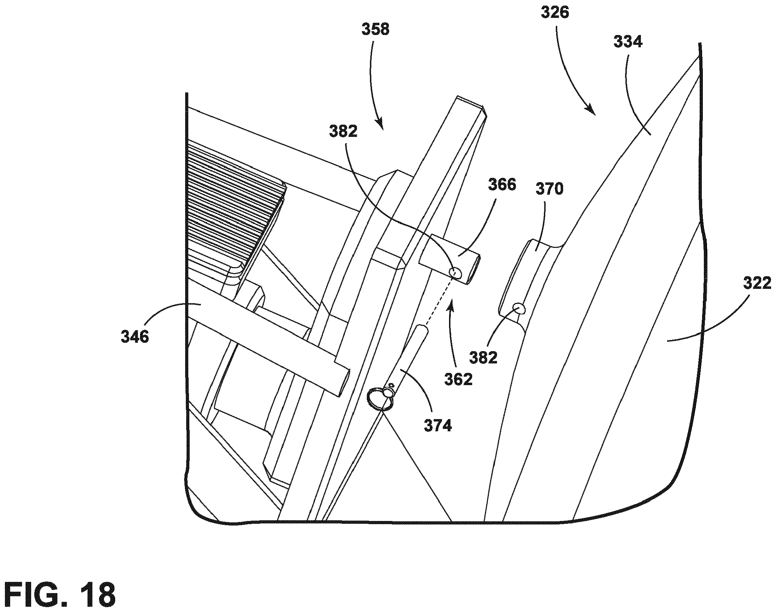

With reference to FIG. 18, the mixing tub 314 is removably coupled to the main frame 346 by detachable connection 358. In the illustrated embodiment, the concrete mixing tub 314 is removably attached to the stand 318 by a locking pin connection 362. The locking pin connection 362 includes a male part 366 extending from the main frame 346, which is inserted into a female part 370 extending from the bottom wall 334 of the mixing tub 314. In other embodiments, the male part 366 may extend from the bottom wall 334 of the mixing tub 314 and the female part may extend from the main frame 346. Once the male part 366 and the female part 370 are engaged, a locking pin 374 extends transversely through holes 382 in both the male and female parts 366, 370 to couple the mixing tub 314 to the main frame 346. The mixing tub 314 can be detached from the stand 318 by removing the locking pin 374 and disengaging the male part 366 from the female part 370.

The base frame 354 includes a transport leg 386 and a stationary leg 390. The transport leg 386 and the stationary leg 390 extend outwardly from the column 338 and away from one another. The transport leg 386 has a triangular shape and includes a set of wheels 378 to help transport the concrete mixer 310. The stationary leg 390 has a triangular shape and includes a foot 394 to prevent the concrete mixer 310 from rolling away when the concrete mixer 310 is not being transported. In the illustrated embodiment, the foot 394 is formed by an elongated tubular member, however, in other embodiments, the foot 394 can be other shapes and sizes. To transport the concrete mixer 310, a user can pull upward on the handles 342 to lift the foot 394. Once the foot 394 is disengaged from the ground surface the user can tilt the stand 318 towards the transport leg 386 to transfer the weight of the concrete mixer 310 over the wheels 378 and begin to roll the concrete mixer 310 to the work location. Once the work location is reached, the foot 394 can be lowered to engage the ground and prevent unwanted movement of the concrete mixer 310. In the illustrated embodiment, the foot 394 extends in a direction perpendicular to the direction of travel to further prevent unwanted movement of the concrete mixer 310.

The concrete mixers disclosed herein provide a user with adjustability to position the mixing tub in different orientations and heights. The concrete mixers also provide a user with mobility to transport the concrete easily and efficiently. Additionally, the mixing tub can be removed entirely from the stand through a simple detachment mechanism, which does not require additional tools.

Various features and advantages of the invention are set forth in the following claims.

## Claims

1. A concrete mixer, comprising:
a mixing tub including an annular side wall and a bottom wall;
a main frame configured to rotatably support the mixing tub, the main frame including a telescoping member that is capable of extending between a first length and a second length; and
a base frame supporting the main frame, the base frame including a first leg having a first wheel to enable transport of the concrete mixer, and a second leg having a foot to prevent the concrete mixer from rolling away.

2. The concrete mixer of claim 1, wherein the main frame further includes a handle.

3. The concrete mixer of claim 1, wherein the mixing tub is coupled to the main frame by a detachable connection for removably coupling the mixing tub to the main frame.

4. The concrete mixer of claim 3, wherein the detachable connection includes a male part and a female part for receiving the male part, wherein the male part is located on one of the main frame and the bottom wall of the mixing tub and the female part is located on the other one of the main frame and the bottom wall of the mixing tub, and, optionally,
the detachable connection further includes a locking pin, the locking pin being removably engagable with the male part and the female part.

5. The concrete mixer of any one of claims 1 to 4,
wherein the first leg has a triangular shape and includes a second wheel;
and/or
wherein the first leg and the second leg each extend outwardly from the main frame in opposing directions;
and/or
wherein the foot is formed by an elongated tubular member.

6. A concrete mixer, comprising:
a mixing tub including an annular side wall and a bottom wall;
a main frame configured to rotatably support the mixing tub; and
a base frame coupled to the main frame, wherein the base frame is movable relative to the main frame between an open configuration corresponding to a first height of the mixing tub relative to a support surface and a closed configuration corresponding to a second height of the mixing tub relative to a support surface.

7. The concrete mixer of claim 6, wherein the main frame and the base frame form a C-shape when in the open configuration.

8. The concrete mixer of claim 6 or 7, wherein the main frame and the base frame form a square shape when in the closed configuration.

9. The concrete mixer of any one of claims 6 to 8, wherein the main frame includes two L-shaped supports each formed by a first arm and a second arm, and wherein the base frame includes two L-shaped supports each formed by a first leg and a second leg.

10. The concrete mixer of claim 9, wherein the first arms and the first legs are oriented generally parallel to one another when in the open configuration, and wherein the first arms and the first legs are oriented generally perpendicular to one another when in the closed configuration.

11. The concrete mixer of any one of claims 6 to 10, further comprising a secondary frame rotatably coupling the mixing tub to the main frame, and, optionally,
the secondary frame includes a handle to help rotate the mixing tub relative to the main frame.

12. The concrete mixer of any one of claims 6 to 11, wherein the base frame includes a locking member to selectively prevent movement of the base frame relative to the main frame.

13. The concrete mixer of any one of claims 6 to 12, further including wheels coupled to the main frame to assist in transport of the concrete mixer.

14. The concrete mixer of any one of claims 6 to 13, further including a bracket coupled to the base frame, the bracket configured to limited rotation of the base frame relative to the main frame, and, optionally,
the bracket is configured to engage the ground to prevent the concrete mixer from unintentionally rolling when the concrete mixer is in the closed configuration.

15. A concrete mixer, comprising:
a mixing tub including an annular side wall and a bottom wall;
a main frame configured to rotatably support the mixing tub; and
a base frame supporting the main frame;
wherein at least one of the main frame and the base frame is adjustable to move the mixing tub from a first height relative to a support surface to a second height relative to a support surface.
